# EUROPEAN PATENT APPLICATION

(11) **EP 3 048 352 A1**
(43) Date of publication of application: **27.07.2016**
(21) Application number: 15152519.3
(22) Date of filing: 26.01.2015
(51) Int. Cl.: F16K 99/00, B01L 3/00, F04B 19/00, F04B 19/24

(54) **Microfluidic check valve**

(71) Applicant: Medizinische Universität Innsbruck, 6020 Innsbruck (AT)
(72) Inventor: Hämmerle, Jacob, 6020 Innsbruck (AT)
(74) Representative: Schwarz & Partner

(57) **Abstract**

Microfluidic check valve (1), including a housing (10) with at least one closed channel (12), wherein the closed channel comprises a first sector (14) and a second sector (16), wherein the cross-sectional area (b) of the second sector (16) is larger than the cross-sectional area (a) of the first sector (14), wherein a sheet (20) is arranged in the second sector (16), wherein said sheet (20) is anchored in a channel inlet (22) ending in the second sector (16), said sheet (20) further consisting of a material that allows the sheet (20) to hinge between an open position and a closed position if pressure is applied by a fluid stream onto said sheet (20), and said sheet (20) tightly covering the cross-sectional area (a) of the first sector (14) if said sheet (20) is in the closed position.

## Description

The present invention relates to a microfluidic check valve, including a housing with at least one closed channel. The invention further relates to a bio-micro-electro-mechanical-system comprising such a check valve. The invention finally relates to a method of preparing a microfluidic check valve.

Bio-micro-electro-mechanical-systems (Bio-MEMS) are systems that apply electro-mechanical devices in the field of biosciences. Some Bio-MEMS are microfluidic (µ-fluidic) devices comprising channels, reservoirs, valves, pumps, transformers, etc. in order to improve medical diagnostics and therapy and to reduce materials, equipment size and costs. Typical applications include drug delivery, health monitoring and diagnosis such as miniaturized, integrated DNA analysis chips, blood analyzers, in particular blood glucose level measurement or detectors of viruses such as HIV, HepABC, etc.

Current developments of µ-fluidic devices seek the integration of systems in order to further minimize the amounts of reagents, to increase separation efficiency, to reduce analyses times, and to increase throughput and automation while reducing the manufacturing costs.

Miniaturization of the components is still going on and present developments show that there is a need to improve the accuracy and durability of the valves. The following properties are required for future µ-fluidic check valves in order to be feasible on industrial scale: The valve has to provide a tight sealing, it has to have a quick response time and the design of the channel-size/valve-size ratio should be adaptable for different purposes. Furthermore, the valves should be scalable in nearly any useable µ-fluidic size and the production should be quick and easy requiring only a few steps. The valve should be automatable but most of all providing good biomedical compatibility.

There are a lot of microfluidic valves that have been developed in the last decades. A lot of these microfluidic valves fulfil some of the above mentioned requirements but still most of these microfluidic valves have never been established in industrial microfluidic chips. The most important reason for this is that most valves according to the state of the art are too large. Their design and materials do not allow small construction on a desired scale. Another problem is that some of the available valves are not biocompatible, others comprising PDMS suffer from swelling.

Many production methods for valves often have their origin in semiconductor industry and are not applicable on the substrates used in microfluidic chips (e.g. fused silica, PDMS, PC etc.). Often they require a certain design of layers that can only be spun or vaporized on the whole chip surface. They often turn the chip into being non-transparent and useless for certain applications such as optical detections and imaging.

Furthermore the methods for production of the valves according to the state of the art are too complicated. Most of the valves require a certain amount of lithographic layers with elaborate etching processes and assemblies in between. That makes it nearly impossible to automate the process. An integration of the valves into a lithographic chip poses a yet not fully resolved challenge.

The object of the present invention is therefore to provide a microfluidic check valve that offers good performance while providing easy manufacturing technique, independent from lithographic techniques.

This object is solved by a microfluidic check valve,
including a housing with at least one closed channel,
wherein the closed channel comprises a first sector and a second sector,
wherein the cross-sectional area of the second sector is larger than the cross-sectional area of the first sector,
wherein a sheet is arranged in the second sector,
wherein said sheet is anchored in a channel inlet ending in the second sector,
said sheet further consisting of a flexible material that allows the sheet to hinge between an open position and a closed position if pressure is applied by a fluid stream on said sheet, and
said sheet tightly covering the cross-sectional area of the first sector if said sheet is in the closed position.

The object is also solved by a method of preparing a microfluidic check valve, comprising
providing the housing with at least one closed channel,
wherein the closed channel comprises a first sector and a second sector,
wherein the cross-sectional area of the second sector is larger than the cross-sectional area of the first sector,
further providing a channel inlet ending in the second sector,
wherein a photopolymerisable monomer is filled into the channel inlet arranged in the second sector so as to at least partially fill the second sector,
wherein said photopolymerisable monomer is exposed to light to polymerise the monomer such that
   a sheet is formed that may hinge between an open position and a closed position if pressure is applied by a fluid stream on said sheet, and such that
   the sheet is anchored in the channel inlet.

A microfluidic check valve is a valve that controls flow through a closed channel with cross sectional areas of less than 10 000 µm².

A closed channel comprises a tube that is able to transport a fluid from A to B. It may have a circular cross-section but it may also have other cross-sectional shapes (rectangular, polygonal, irregular etc). Preferably, the cross-sectional area of the closed channel is constant in the first sector which means that the tube has a cylindrical shape in these sections.

In one preferred embodiment the closed channel comprises a third sector with a constant cross-sectional area. The cross-sectional areas of first sector and third sector may be identical in order to maintain laminar flow in the channel.

After the first sector and - if there is a third sector between the first sector and the third sector - there is a second sector with larger cross-sectional area than the first sector. First, second and - if present - third sector are arranged without intervening sectors.

The sheet is arranged in the second sector, and it is anchored in a channel inlet ending in the second sector. "Anchored" means that the sheet is held tightly in the channel inlet. Anchorage of the sheet is e.g. possible by a projection of the sheet that extends through a bottleneck in the channel inlet with an enlarged portion in the projection behind the bottleneck.

In the closed position the sheet covers the cross-sectional area of the first sector of the check valve. The sheet is further characterised in that it consists of a material that allows the sheet to hinge into the second sector if a pressure is applied by a fluid streaming from the first sector in direction of the second sector, and that tightly covers the cross-sectional area of the first sector if a pressure is applied by a fluid streaming in direction of the first sector. Hence, the sheet consists of a flexible material.

There are two possibilities of how to anchor the sheet in the inlet channel:
a) The sheet is in closed position if no pressure is applied by a fluid stream, i.e. the sheet covers the cross-sectional area of the first sector. If a pressure is applied by a fluid stream from the first sector into the second sector, the sheet hinges into the second sector forming the open position.
   The sheet is a polymer that is flexible and may hinge within the second sector thereby forming the "open-position" of the check valve if the pressure applied from the first sector is larger than the pressure applied from the second sector on the sheet. If no pressure is applied or if the pressure in the second sector is larger than in the first sector than the flexible sheet moves back and covers the cross section of sector 1 forming a closed position.
b) The sheet is in open position if no pressure is applied by a fluid stream, i.e. the sheet does not cover the cross-sectional area of the first sector. If a pressure is applied by a fluid stream from the second sector into the first sector, the sheet hinges into the closed position.

For both possibilities the flow direction of the fluid is controlled by the check valve from the first sector into the second sector, whereas the reverse direction (closed position) from the second section to the first section is blocked. The difference is that for possibility a) the check valve already is in closed position if a change of flow-direction of the fluid occurs, which might be useful for some applications.

The method of preparing said microfluidic check valve is based on the finding that a photopolymerisable monomer can be filled into the second sector via the channel inlet so as to at least partially fill the second sector; next the photopolymerisable monomer is exposed to a light source such as a laser or a mercury vapour lamp to polymerise the monomer. The light exposure is such that a sheet is formed that covers the cross-sectional area of the first sector if the sheet is in the closed position. The channel inlet may comprise a bottleneck. In that case the monomer is polymerised before and after the bottleneck to form the anchor for the sheet.

In a preferred embodiment the housing is translucent. A translucent housing enables photopolymerisation through the housing and it allows observation of the check valve.

Hence, in a further preferred embodiment the sheet is a photopolymerisable polymer.

The second sector is essentially cylindrical in one embodiment. Preferably the second sector is right circular cylinder.

In one embodiment the first sector has a circular cross section at least at the position where it is joins the second sector, wherein the sheet has a at least partially a circular shape that extends the circular cross section of the first sector.

In one preferred embodiment the microfluidic valve is further characterised by a reinforcing element in the second sector in proximity to the channel inlet.

In a further aspect the invention relates to a microfluidic pump. The microfluidic pump comprises a first microfluidic check valve as described above and a second microfluidic check valve as described above in a serial arrangement further comprising a controllable element for increasing pressure arranged between said first microfluidic check valve and said second microfluidic check valve.

The controllable element for increasing pressure could be a heating element. By turning on the heating element fluid is heated resulting in an expansion and - if the fluid is a liquid - most likely in vaporisation. A heating element can be implemented most easily into the microfluidic pump.

In a preferred embodiment the heating element is in the form of a resistive heat element.

For the operation of the microfluidic pump the heating element is turned on so that fluid vaporises. Vaporisation causes an expansion and thus a pressure increase that presses the sheet of the first check valve in the closed position and the sheet of the second check valve into the open position. The built up pressure results in pumping of liquid in direction of the second check valve. Preferably, there is a series of check valves so that pairs of check valves are formed with heating elements arranged in between each pair of microfluidic check valves.

In a further aspect the invention relates to a microfluidic check valve array comprising at least two check valves of the aforementioned kind with each check valve comprising an input channels, an exit channel and the microfluidic check valve being arranged between input und exit channel, wherein the exit channels end up in a chamber, wherein the chamber in connected to an output channel.

The invention further concerns a thermal inkjet or piezoelectric pump, comprising a microfluidic check valve or microfluidic pump as described above.

The invention further concerns a bio-micro-electro-mechanical-system, micro/Nanofluidic-System, Lab on a Chip-System, or Total Analysis System, comprising a microfluidic check valve and/or microfluidic pump and/or microfluidic check valve array according to the above mentioned kind.

The system may be selected from the group consisting of drug delivery apparatus, health monitoring apparatus, diagnosis apparatus, DNA analysis apparatus, blood analyzing apparatus.

Further details and advantages of the invention are described below.

Method of preparing the sheet:
The method of preparing said microfluidic check valve offers good performance while providing easy manufacturing technique, independent from lithographic techniques. Therefore no extra elastomer layer hast to be added to any chip design which makes the chip easier to engineer and different elements do not interfere with an obligatory additional layer.

The elastic photopolymer, thereafter forming the sheet serving as the closing valve element, should only be filled inside the housing of the valve, due to the specific design with the vertical inlet channel. No other channels have to be filled with liquid photopolymer. A holding case located in a microfluidic channel was implemented into a fused silica microfluidic chip. The chip was manufactured with femtosecond lasers pulses through 2-photon photoirritation followed by chemical etching with 10M KOH solution. The process is called Femtosecond Laser Direct Writing FsLDW.

Acrylic photopolymers where selected and chosen by their physical properties, consisting of monomers, crosslinkers, solvent and photoinitiators. Requirements such as friction on the contact zone with the valve case, elasticity, and biocompatibility where considered. The more fluorination of the photopolymer, the less friction and the more biocompatibility is expected. Two compositions where mainly used to build the embodiment:
2 : 1 w/w PE3 : 1-propanol photoinitiated by 10 mg ml-1 AIBN
3 : 3 : 4 v/v/v ratio of 1,3-butanediol diacrylate, 3FEA, and 1-propanol.

After producing the hollow 3D structures the acrylic monomer was filled in section 2 via the channel inlet through the vertical cylindrical input channel only by placing a drop of a precalculated amount of monomer onto the vertical channels inlet. Through gravity and capillary forces, the mixture is sucked down filling the valve cage.

Because of the viscosity and surface tension of the monomer mixture and the designed vertical input channel, the volume can be defined to only fill the structure that holds the photo polymerised sheet. Therefore substrate can be saved and it is not necessary to fill the full microfluidic system with the monomer mixture. Therefore, no tubing has to be attached, no external apertures have to be adimpleated with monomer mixture.

Next an engineered beam of light (340 - 520 nm, preferably ~355nm, mercury lamp) that was shaped by a slit geometry on a copper foil (also produced by direct photoablation from the Fs-Laser) was directed on the right spot to form the polymer shape by photopolymerisation. The shape of the beam defines the footprint of the structure that will be photopolymerised. The slit is placed in such a manner, that the socket of the sheet and the vertical inlet channel are hardened and therefore closed.

Excitation time can be varied by observing the polymerisation process through an optical system, however, might be automated. Times between 20 - 30s where used. Excitation time defines the stiffness of the membrane and therefore its opening and closing behaviour and its stability.

After the polymerisation process is done the remaining liquid monomer is flushed by an acetonitrile solution. The valve was tested to hold 8 atm (0.81 Megapascals) to 12 atm pressure in the closing direction.

In general the check valve acts like an electric diode but for fluidics and gases. Therefore it can be used in a lot of circuits needed in digital microfluidics. Here are some ideas on how the check valve will enable diverse microfluidic functions.

Define Inputs and Outputs: Defining and securing in- and output channels on the chips: Volumes used in microfluidics are usually about nano- to pico- to femtoliters. The volumes handled in the chip are of multiple powers smaller than the dead volumes that seat in the connecting tubes and the external reservoirs. Small changes in the external environment of the chip will move a relatively huge volume inside the chips structures. A touch of a connection tube is enough to move millions of cells in a micrometer-sized channel for instance. Therefore a check valve integrated in the chips in- and output channels will securely safe the conditions inside the chip. Additionally one is not capable of destroying the chip by connecting an input tube on an output channel and vice versa. Backflow prevention: Also fluid streams can be directed inside a chips channel network via the microfluidic check valve. Where usually pressure from one side will push fluid not only in the desired direction but also in other channels upstream, a check valve can direct the flow towards a specific gateway. If there is no vacuum or positive pressure over the opening threshold, the valve will stay closed. For example this can protect cells in chambers, nourished or exposed by different test substrates through different input channels.

Microfluidic diode: A lot of effort is spent on developing digital microfluidics where fluids are controlled within logic gates. Fluidic elements (like transitors, AND/OR shifts) are used to build complex microfluidic circuits. In this area a check valve fulfils the task of an electrical diode. Formations in infinite ways can be realised in use of a microfluidic diode. Avoid vaporisation: It was observed that vaporization of liquids inside the channels will stop at the check valve. It is very likely that the check valve will prevent liquid from vaporising thus keep a chip and its content from drying out.

Microfluidic pump: Inertial pumping was presented 2012 by Govyadinov (doi: 10.1063/1.4769755) from HP Labs California where a resistive TIJ element vaporises a bubble while producing a lot of pressure. Directing this force into one direction is a challenge not yet satisfyingly solved. A high-performance microfluidic check valve could solve this issue.

Further details are shown in the details and the description of the figures.
- Fig. 1: shows a housing for a microfluidic check valve.
- Fig. 2a and 2b: show a microfluidic check valve in closed position (Fig. 2a) and open position (Fig. 2b).
- Fig. 3: schematically shows a microfluidic pump.
- Fig. 4: schematically shows a circular microfluidic check valve array.

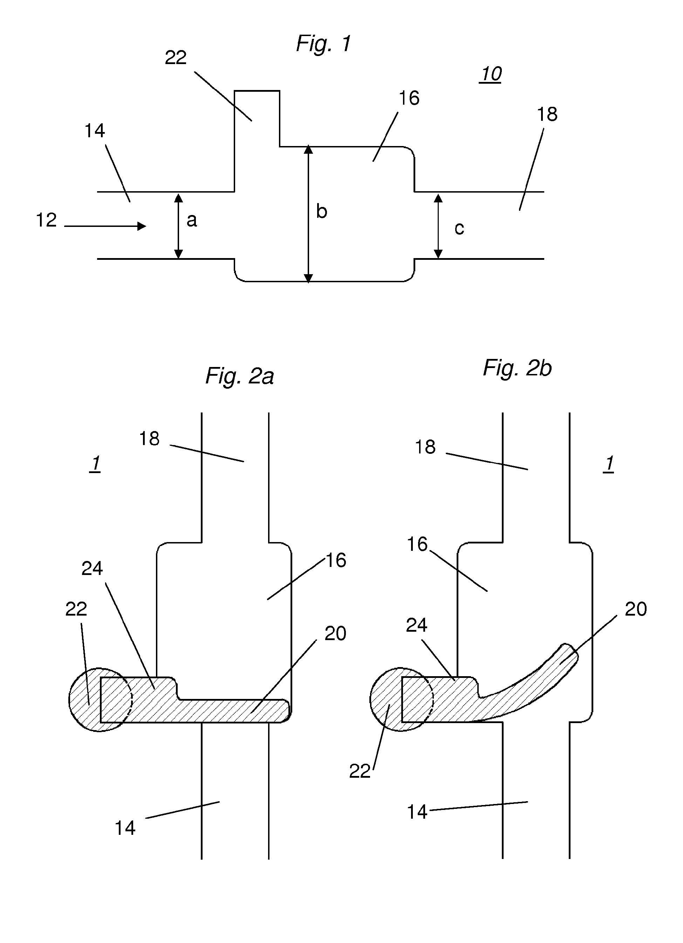

Fig. 1 shows a cross-section of a housing 1 of a microfluidic check valve 1 (Fig. 2a,. 2b). The housing 10 comprises one closed channel 10 allowing a fluid to pass between inlet and exit. The closed channel 10 comprises three sectors, namely a first sector 12, a second sector 14 and a third sector 16 all without intervening sectors and in serial arrangement. The cross-sectional area b of the second sector 16 is larger than the cross-sectional area a of the first sector 12. In the shown example the third sector 18 has a cross-sectional area c that is essentially the same as the cross-sectional area a of the first sector 14 to reduce turbulent flow.

Furthermore there is a channel inlet 22 that ends in the second sector 16. This channel inlet 22 allows to funnel a polymerisable monomer into the second sector 16. The housing 10 is at least partially translucent in the second sector 16 to allow photopolymerisation of a monomer within the housing.

The microfluidic check valve 1 shown in Fig. 2a and 2b comprises the housing 10 as specified in Fig. 1. Apart from the features already described above the microfluidic valve 1 further comprises a sheet 20 that is arranged in the second sector 16. The sheet 20 is anchored in the channel inlet 22 ending in the second sector 16. Thereby the sheet plugs the channel inlet 22 so that fluid streaming in the closed channel 10 cannot leave the channel at the inlet 22. The sheet 20 consists of a flexible material (polymer) that allows the sheet 20 to hinge between an open position (Fig. 2b) and a closed position (Fig. 2a) if pressure is applied by a fluid stream onto said sheet 20.

The sheet 20 tightly covering the cross-sectional area a of the first sector 14 if said sheet 20 is in the closed position.

As can be seen from the figures, the sectors 14, 16, 18 are essentially cylindrical, in particular the first sector 14 has a rectangular cross section at least at the position where it joins the second sector 16. Also the sheet 20 has a rectangular shape that extends the cross section a of the first sector 14.

The reinforcing mounting element 24 in the second sector 16 in proximity to the channel inlet 22 provides for better retraction of the sheet 20 into the starting position.

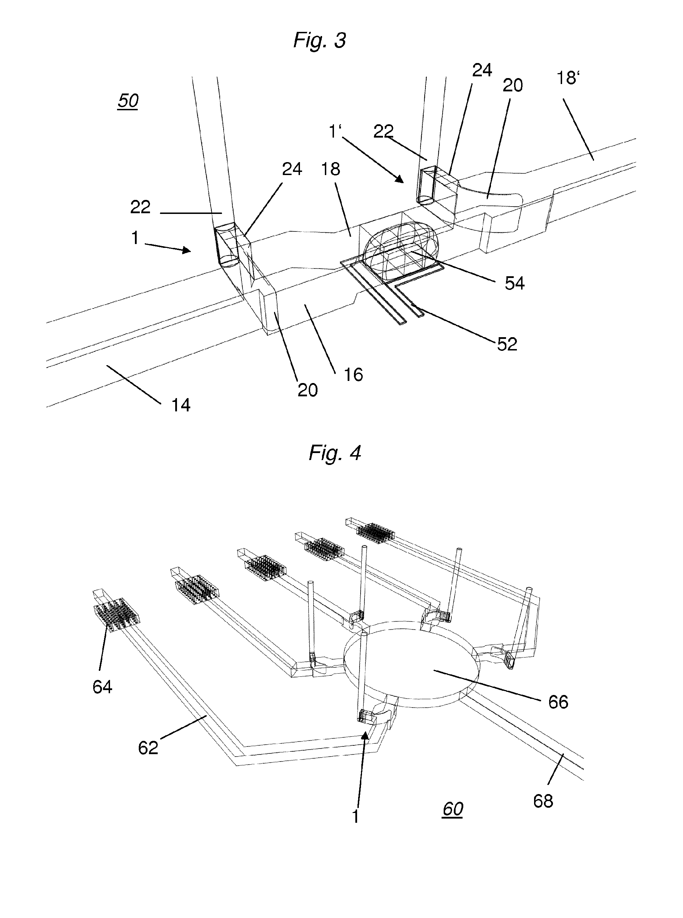

Fig. 3 schematically shows a microfluidic pump 50 comprising two microfluidic check valves 1, 1' in series. Both microfluidic check valves 1, 1' in Fig. 3 are identical to the microfluidic check valves of Fig. 1 and 2, hence, with respect to their structure reference is made to the above mentioned figures. In addition, a controllable element for increasing pressure in the form of heating element 52 (resistive heat element) 52 is arranged between the two check valves 1, 1'. By turning on the heating element 52, a droplet 54 arranged in proximity tof the heating element 52 expands and vaporises within microseconds and so the pressure between the two check valves 1, 1' increases, hence pressing the sheet 20 of the first check valve 1 in the closed position and the sheet 20 of the second check valve 1' into the open position. The built up pressure results in pumping of liquid in direction of the second check valve. Next the bubble condenses resulting in an underpressure at its centre that opens the first check valve and sucks new liquid towards the area in between the two check valves 1, 1' while the second check valve 1' remains closed. Practically, there is a series of several check valves 1, 1' with controllable elements for increasing pressure 52 between each pair of check valves 1, 1' in such a microfluidig pump 50 in order to increase the pumpage.

Fig. 4 shows a circular microfluidic check valve array 60. All check-valves 1 are open for function demonstration purpose. Several input channels 62, leading through a filter unit 64 to avoid dust contamination, provide test substrate to trapped cells in a surveillance chamber 66. One output channel 68 diverts the waste. If one channel 62 is pressurised the pertaining valve 1 will open, substrate will run in the chamber 66. The other closed check valves 1 will prevent the test substrate from flowing back into the other channels 62 and mixing up with their content. One substrate can be held inside the chamber 66. All input channels 62 will not hold dead volume. External pumps will deploy the same volume to the chamber 66 they are set to pump.

## Claims

1. Microfluidic check valve (1),
including a housing (10) with at least one closed channel (12),
wherein the closed channel comprises a first sector (14) and a second sector (16),
wherein the cross-sectional area (b) of the second sector (16) is larger than the cross-sectional area (a) of the first sector (14),
wherein a sheet (20) is arranged in the second sector (16),
wherein said sheet (20) is anchored in a channel inlet (22) ending in the second sector (16),
said sheet (20) further consisting of a material that allows the sheet (20) to hinge between an open position and a closed position if pressure is applied by a fluid stream onto said sheet (20), and
said sheet (20) tightly covering the cross-sectional area (a) of the first sector (14) if said sheet (20) is in the closed position.

2. Microfluidic check valve according to claim 1, wherein the housing (10) is at least partially translucent.

3. Microfluidic check valve according to claim 1 or claim 2, wherein the sheet (20) is a photopolymerisable polymer.

4. Microfluidic check valve according to one of claims 1 to 3, wherein the second sector (16) is essentially cylindrical.

5. Microfluidic check valve according to one of claims 1 to 4, wherein the sheet (20) has a shape and size that extends the cross section (a) of the first sector (14) at the position where it joins the second sector (16).

6. Microfluidic check valve according to one of claims 1 to 5, **characterised by** a reinforcing mounting element (24) in the second sector (16) in proximity to the channel inlet (22).

7. Bio-micro-electro-mechanical-system, micro/Nanofluidic-System, Lab on a Chip-System, or Total Analysis System, comprising a microfluidic check valve according to any of claims 1 to 6.

8. System according to claim 7, selected from the group consisting of drug delivery apparatus, health monitoring apparatus, diagnosis apparatus, DNA analysis apparatus, blood analyzing apparatus, treatment apparatus, preferably blood treatment apparatus, diagnostic device.

9. A method of preparing a microfluidic check valve (1), comprising
providing the housing (10) with at least one closed channel (12),
wherein the closed channel (12) comprises a first sector (14) and a second sector (16),
wherein the cross-sectional area (b) of the second sector (16) is larger than the cross-sectional area (a) of the first sector (14),
further providing a channel inlet (22) ending in the second sector (14),
wherein a photopolymerisable monomer is filled via said channel inlet (22) arranged in the second sector (14) so as to at least partially fill the second sector (14),
wherein said photopolymerisable monomer is exposed to light to polymerise the monomer such that
a sheet (20) is formed that may hinge between an open position and a closed position if pressure is applied by a fluid stream on said sheet (20), and such that
the sheet (20) is anchored in the channel inlet (22).

10. Microfluidic pump (50), comprising a first microfluidic check valve (1) according to one of claims 1 to 6 and a second microfluidic check valve (1') according to one of claims 1 to 6 in a serial arrangement further comprising a controllable element for increasing pressure (52) arranged between said first microfluidic check valve (1) and said second microfluidic check valve (1').

11. Microfluidic pump according to claim 10, wherein the controllable element for increasing pressure is a heating element (52).

12. Microfluidic pump according to claim 10 or claim 11, **characterised by** an array of microfluidic check valves (1) according to one of claims 1 to 6 with at least one a controllable element for increasing pressure (52) arranged between each pair of microfluidic check valves (1,1').

13. Microfluidic check valve array (60), comprising at least two microfluidic check valves (1) according to one of claims 1 to 6, with each microfluidic check valve (1) comprising an input channel (62), an exit channel and the microfluidic check valve (1) being arranged between input (62) und exit channel, wherein the exit channels end up in a chamber (66), wherein the chamber (66) is connected to an output channel (68).
